# FASCICULE DE BREVET EUROPEEN

(11) **EP 3 458 325 B1**
(45) Date de publication et mention de la délivrance du brevet: **07.04.2021**
(21) Numéro de dépôt: 17729182.0
(22) Date de dépôt: 22.05.2017
(51) Int. Cl.: B60W 40/08, B60W 40/09, B60W 40/105, B60W 50/00

(54) **PROCÉDÉ DE PROPOSITION D'UNE VITESSE DE ROULAGE**
VERFAHREN ZUR MODELLIERUNG EINER FAHRGESCHWINDIGKEIT
METHOD FOR PROPOSING A DRIVING SPEED

(30) Priorité: 20.05.2016 FR 1654539
(43) Date de publication de la demande: 27.03.2019
(73) Titulaire: Compagnie Générale des Etablissements Michelin, 63000 Clermont-Ferrand (FR)
(72) Inventeur: LINDA, Jean-Louis, 63040 Clermont-Ferrand Cedex 9 (FR); STRAHM, Christian, 63040 Clermont-Ferrand Cedex 9 (FR); DUVERNIER, Marc, 63040 Clermont-Ferrand Cedex 9 (FR)
(74) Mandataire: Roussy, Delphine
(86) Numéro de dépôt international: PCT/FR2017/051248
(87) Numéro de publication internationale: WO 2017/198973

(56) Documents cités:
- EP-A1- 1 302 356
- EP-A1- 2 537 727
- WO-A1-2011/053304
- FR-A1- 2 997 670
- US-A1- 2013 018 562

## Description

### DOMAINE DE L'INVENTION

La présente invention se situe dans le domaine des véhicules automobiles, et notamment dans le domaine des systèmes et dispositifs d'assistance à la conduite de tels véhicules.

Les véhicules automobiles sont aujourd'hui équipés de nombreux équipements permettant d'améliorer la sécurité du conducteur et des passagers d'un véhicule. On connait ainsi les systèmes d'assistance de freinage (ABS) permettant d'éviter le blocage des roues en cas de freinage intense. On connaît aussi les correcteurs électroniques de trajectoire (ESP), qui permettent, par un contrôle de la trajectoire, d'éviter les dérapages des véhicules.

Le développement de ces systèmes a été rendu possible par l'installation de nombreux dispositifs électroniques dans les véhicules, et la mise en œuvre de calculateurs électroniques de plus en plus puissants, permettant d'embarquer des puissances de calcul importantes dans des véhicules automobiles sans encombrement additionnel.

Afin d'éviter les accidents, notamment dans des conditions météo ou de roulage difficiles, il apparaît utile de pouvoir estimer les risques relatifs à la perte d'adhérence d'un véhicule en situation de roulage. Une telle perte d'adhérence se produit lorsque les efforts que le véhicule va demander au contact pneu/chaussée i.e. le besoin d'adhérence sont supérieurs au potentiel du pneu et de la chaussée à passer de tels efforts i.e. le potentiel d'adhérence maximal disponible.

On connaît, dans l'état de la technique, différentes solutions permettant d'estimer le potentiel d'adhérence disponible entre un pneumatique et la chaussée sur laquelle roule le pneumatique. Certaines de ces solutions reposent sur la sollicitation du potentiel d'adhérence jusqu'à un certain niveau, par exemple la moitié du potentiel maximum, et proposent d'en déduire, par extrapolation, le potentiel maximum disponible. Toutefois ces solutions nécessitent une manœuvre proche de la limite d'adhérence, ce qui ne permet pas de laisser une marge de sécurité suffisante pour le conducteur du véhicule, notamment dans les conditions de faible niveau d'adhérence.

Enfin, on connaît des approches basées sur des modèles d'équilibre véhicule et des hypothèses de suivi de trajectoire définie a priori en fonction de la cartographie. Ces approches sont couteuses et ne peuvent pas prendre en compte la complexité des manœuvres réellement effectuées par les conducteurs qui intègrent de nombreux éléments inconnus des systèmes tels que la visibilité, l'anticipation des intersections, l'enchainement des virages Les documents US 2013/018562 A1 et EP 1302356 A1 divulguent des procédés connus, pemettant de prendre en compte respectivement les conditions d'adhérence et un profil de conduite du conducteur.

La présente invention vise à remédier à ces inconvénients en proposant une solution permettant la détermination en temps réel du potentiel d'adhérence, et son utilisation pour fournir à un véhicule et/ou son conducteur une proposition de vitesse à respecter pour un roulage dans des conditions optimisées en termes de confort et de sécurité.

### BREVE DESCRIPTION DE L'INVENTION

Ainsi, l'invention concerne un procédé de proposition d'une vitesse de roulage pour un conducteur au volant d'un véhicule, le procédé comprenant les étapes suivantes au cours desquelles:
- On estime le potentiel d'adhérence disponible à un instant donné entre un pneumatique du véhicule et la chaussée sur un trajet à venir prédéterminé,
- On détermine, parmi un ensemble de classes de conduite prédéterminées, des classes sécuritaires pour lesquels le besoin d'adhérence sur le trajet prédéterminé reste inférieur au potentiel d'adhérence,
- On sélectionne, parmi ces classes sécuritaires, une classe de confort sécuritaire en fonction d'un profil conducteur,
- On détermine, en fonction de cette classe de confort sécuritaire et d'une localisation du véhicule, une vitesse de base proposée de roulage sur une portion de trajet à venir.

On précise ici que ce procédé de proposition est mis en œuvre pour un véhicule dont le trajet est considéré comme prédéterminé. Dans un premier cas, le véhicule connaît la destination et les routes empruntées, par exemple parce que le conducteur a programmé son trajet via un navigateur installé dans le véhicule.

Dans le cas où le trajet n'est pas programmé, un procédé selon l'invention comprend préférentiellement une étape initiale consistant à accrocher le véhicule à une route réelle. Cette étape, appelée « map matching » ou recalage cartographique, consiste à comparer régulièrement des positions GPS du véhicule avec des données cartographiques, afin de déterminer la route empruntée, qui constitue alors le trajet prédéterminé jusqu'à la prochaine intersection.

Par conséquent, dans l'ensemble de la description, il faudra considérer que les étapes, par exemple la détermination d'un besoin d'adhérence, sont effectuées pour ce trajet prédétermine identifié au préalable. On précise ici que par « trajet à venir » on entend non seulement des coordonnées géographiques de points formant un trajet, mais également des informations concernant la pente et le dévers du trajet, paramètres qui n'apparaissent pas à la seule lecture des coordonnées GPS.

### I - Estimation d'un potentiel d'adhérence

### I-1-Détermination des paramètres influents

Dans un mode de réalisation particulier, un procédé selon l'invention comprend une étape initiale de détermination de paramètres influents sur le potentiel d'adhérence, ces paramètres étant compris dans le groupe comprenant le grip number de la chaussée, la hauteur au sable de la route ou profondeur moyenne de texture appelée PMT, la hauteur d'eau sur la chaussée, la température de l'air environnant, la vitesse de roulage et l'ensemble des caractéristiques du pneumatique ayant une influence sur l'adhérence, notamment mais non exclusivement la pression du pneumatique, sa hauteur de sculpture, sa charge et le type de pneumatique.

Ces paramètres influents sont fournis directement par le véhicule, et/ou fournis par un système extérieur, et/ou mesurés en temps réel. Ainsi, par exemple, le grip number de la chaussée peut être fourni par des cartographies préexistantes. La température peut être mesurée en temps réel, par exemple par des capteurs disponibles aujourd'hui sur un véhicule.

Les paramètres du pneumatique, tels que la pression, la hauteur de sculpture, la charge et la vitesse de roulage peuvent être déterminés par des systèmes embarqués dans le véhicule ou dans les pneumatiques.

Dans un mode de réalisation particulier, l'étape initiale de détermination de paramètres influents comprend une étape de mesure de la puissance sonore générée par le pneumatique lors du roulage, et une étape de détermination de la hauteur d'eau sur la chaussée et de la hauteur de sculpture en fonction de cette puissance sonore. Dans un autre mode de réalisation particulier, la macro-texture de la route est également déterminée en fonction de cette puissance sonore. A cet effet, le véhicule dans lequel un procédé selon l'invention est mis en œuvre doit être muni d'un microphone installé au niveau des pneumatiques ou dans les parechocs avant ou arrière du véhicule.

Le nombre de paramètres ayant un impact potentiel sur le bruit du pneumatique peut être important. Toutefois, il apparait que certains paramètres ont une influence faible ou de deuxième ordre sur la nature du bruit généré par le pneumatique. Cela peut être le cas par exemple de la pression interne du pneumatique ou encore de la charge du pneumatique.

Ainsi, il apparait que l'état météorologique de la route, caractérisé par une hauteur d'eau sur la chaussée, semble être un paramètre de premier ordre. Son impact sur le bruit du pneumatique est très important et surtout faiblement dépendant de tous les autres paramètres tels que l'état du revêtement de la route, l'état d'usure du pneumatique ou encore le type de sculpture du pneumatique. Ces autres paramètres sont aussi susceptibles dans une moindre mesure de faire varier le bruit de roulage pour autant que l'on sache discerner leurs signatures acoustiques propres.

Concernant cette hauteur d'eau, on différencie une route sèche d'une route humide, caractérisée par une hauteur d'eau affleurant les rugosités naturelles du revêtement de la route, ou d'une route mouillée pour laquelle la hauteur d'eau dépasse le niveau des rugosités naturelles du revêtement de la route.
Dans un exemple de réalisation, cette hauteur d'eau sur la route, est estimée en utilisant l'un des moyens compris dans le groupe comprenant :
- des stations météos fixes installés en bord de route, et comprenant des moyens de communiquer aux véhicules roulant sur la route la hauteur d'eau lors de leur passage,
- des capteurs optiques embarqués sur le véhicule,
- des modèles analytiques permettant d'estimer une hauteur d'eau résiduelle en fonction de données météorologiques connues (quantité de précipitations, ensoleillement ...) ou de données concernant la route (drainabilité, dévers, trafic ...).

Concernant la profondeur moyenne de texture, un revêtement est qualifié de revêtement fermé lorsqu'il prend un aspect lisse et sans macro-rugosités, comme par exemple un bitume ayant ressué après avoir subi de fortes chaleurs. Un revêtement sera considéré comme ouvert, lorsque les macro-rugosités sont importantes comme celles d'un revêtement usé ou celui d'une route de campagne réparée rapidement à l'aide d'un enduit superficiel réalisé par projection de cailloux sur du bitume. Un revêtement medium décrit tous les revêtements dans un état intermédiaire entre les deux états précédents et qualifie plus particulièrement les revêtements neufs. On peut ainsi catégoriser les différentes macro-textures de la façon suivante : un revêtement à macro-texture fermée présente une PMT comprise entre 0 et 0.4 millimètres. Un revêtement à macro-texture medium présente une PMT entre 0.4 et 1.1 millimètres, et un revêtement à macro-texture ouverte présente une PMT supérieure à 1.1 millimètres. On sait que la macro-rugosité d'un revêtement influence fortement le bruit engendré par le pneumatique. En particulier, le phénomène de pompage de l'air emprisonné entre le sol et la sculpture du pneumatique, est d'autant plus prononcé que le revêtement de la route est fermé. La connaissance en temps réel de l'état d'une route peut s'avércr utile dans le cas où, par exemple, cette information est retournée par un grand nombre de véhicules ou une flotte de véhicules dédiés, vers un système centralisé de suivi et d'entretien du réseau routier.

Concernant la hauteur de sculpture du pneumatique, qui caractérise son état d'usure, on distingue l'état neuf, l'état usé, et un état intermédiaire considéré ici comme l'état du pneumatique à mi- usure. Une information de l'évolution dans le temps de la caractéristique d'usure, est utile, surtout si elle est couplée à l'information de l'état météorologique de la route. En effet, il est connu qu'un véhicule équipé de pneumatiques usés qui roule sur un revêtement mouillé risque plus facilement de perdre son adhérence que s'il avait des pneus neufs.

Dans un mode de réalisation, l'estimation d'une hauteur de sculpture restante, est donnée en temps réel par l'un des moyens compris dans le groupe comprenant :
- Des capteurs embarqués dans le pneumatique,
- Des capteurs optiques évaluant l'évolution de la hauteur de sculpture, ces capteurs étant embarqués sur le véhicule ou installés au sol,
- Des capteurs magnétiques,
- Des modèles d'usure embarqués prenant en compte le kilométrage parcouru, l'usage, le type véhicule, des points de mesure d'usure réalisés par des moyens mécaniques ou optiques ...

Le type de sculpture du pneumatique est, par exemple, une sculpture de type été ou une sculpture de type hiver. Ces deux types de pneumatiques se distinguent essentiellement par des bandes de roulement ayant des sculptures différentes, plus directionnelle, fortement entaillées et lamélisées dans le cas des sculptures hiver, moins directionnelles et moins entaillées dans le cas des sculptures été, ainsi que par la nature des matériaux formant la bande de roulement, plus tendre dans le cas des pneumatiques hiver, et plus dure dans le cas des pneumatiques été. Ces caractéristiques ne sont pas sans influence sur le comportement et la tenue de route du véhicule, et donc sur son adhérence.

### I-2 -Méthode utilisant un modèle mathématique

Connaissant les paramètres influents, plusieurs modes de réalisation sont envisageables pour la détermination du potentiel d'adhérence disponible. Dans un premier mode de réalisation préférentiel, on utilise ainsi une formule mathématique permettant d'estimer ce potentiel d'adhérence en fonction de la vitesse. Ainsi, on peut calculer le potentiel comme suit :
µₘₐₓ= f(micro-rugosités du sol, vitesse, hauteur au sable, hauteur d'eau, hauteur sculpture, pression de gonflage, charge) Cette fonction est spécifique à chaque pneumatique accessible sur le marché et homologué. Tout ou partie des paramètres indiqués dans cette expression ont auparavant été mesurés et/ou déterminés au préalable, comme précédemment décrit.

### I-3 -Méthode utilisant des abaques

Dans un autre mode de réalisation, l'étape de détermination d'un potentiel d'adhérence en fonction de la vitesse est effectuée par la mise en œuvre d'abaques de niveau d'adhérence prédéterminés. Dans ce mode de réalisation, plusieurs étapes sont mises en œuvre, seront ultérieurement décrites en détail à l'aide de figures :
- On construit des abaques de niveau d'adhérence en fonction de paramètres influents,
- On mesure, en temps réel, les valeurs de ces paramètres,
- On sélectionne l'abaque correspondant aux valeurs des paramètres, et
- On lit, sur l'abaque, la valeur estimée du potentiel d'adhérence, pour la vitesse réelle de roulage.

### I-4 - Méthode par rayon de roulement

Dans un autre mode de réalisation de la présente invention, l'étape de détermination d'un potentiel d'adhérence disponible comprend les étapes suivantes :
- on évalue l'évolution d'un rayon de roulement du pneumatique en fonction de conditions de roulage prédéterminées dudit pneumatique sur des sols d'adhérences variables et connues, pour constituer une base de données expérimentales,
- à partir de la base de données expérimentales, on établit un modèle d'estimation du potentiel d'adhérence en déterminant une fonction reliant le potentiel d'adhérence au rayon de roulement et à des paramètres véhicule,
- en cours de roulage du pneumatique, on détermine le rayon de roulement et, par application dudit modèle, et en fonction des paramètres véhicules, on évalue le potentiel d'adhérence dudit pneumatique.

Une fois le potentiel d'adhérence disponible estimé, il est alors possible de déterminer une classe de conduite qui permettra ensuite de proposer une vitesse de roulage au vu de ce potentiel d'adhérence.

### III - Détermination d'une classe de confort sécuritaire

### III-1 - Définition d'une classe de conduite

Afin de fournir une proposition de vitesse la plus adaptée possible, on utilisera des classes, ou catégories de conduite, définies au préalable. Les classes de conduite permettent de déterminer des profils de vitesses, qui permettront d'effectuer la proposition de vitesse à un conducteur en fonction de la classe de conduite qui aura été déterminée, du trajet prédéterminé, et de la localisation du véhicule sur ce trajet.

Pour déterminer des catégories de conduite, on a, au préalable, observé la vitesse et/ou l'accélération d'un certain nombre d'individus sur le trajet prédéterminé, et on effectue une classification hiérarchique sur l'ensemble des observations disponibles. On précise ici que les variables sont enregistrées avec une fréquence propre aux moyens d'enregistrement. Ces variables ne sont pas statistiquement considérées comme des courbes continues, mais comme un ensemble d'observations ponctuelles. Ainsi, à chaque individu est associé un ensemble d'observations pour chacun de ces passages.

Le principe de cette classification est, en utilisant une notion de distance adéquate, de regrouper les utilisateurs dans des classes, chacune le plus homogène possible et, entre elles, les plus distinctes possible. Dans un exemple de réalisation, les classes sont telles que la variance intra-classes est minimisée, alors que la variance intergroupes est maximisée.

De manière avantageuse, pour effectuer la classification, on enregistre la vitesse et/ou l'accélération d'un individu au cours de plusieurs passages sur un même parcours, chaque passage donnant lieu à un ensemble d'observations. Pour définir la distance entre deux utilisateurs, on calcule la distance entre les vitesses et/ou accélérations de référence de chacun de ces utilisateurs.

Dans une telle classification hiérarchique, le nombre de classes utilisées est choisi à posteriori, et est considéré comme adéquat si la variance interclasse ne diminue pas significativement en ajoutant une classe.

Ainsi, dans un exemple de réalisation de la présente invention, on a envisagé d'utiliser six classes, pour minimiser la variance interclasse. Or, on a constaté qu'on obtenait des résultats aussi pertinents avec quatre classes. On choisit donc préférentiellement ce nombre de quatre classes, pour des raisons de parcimonie. Cela permet en effet de réduire la puissance de calcul et les temps de calcul nécessaires.

Toujours dans un souci de parcimonie, dans un exemple de réalisation, les catégories sont déterminées en utilisant non pas l'ensemble des observations disponibles, mais seulement une partie de ces observations. On choisira par exemple les observations sur des zones de conduite pertinentes, telles que des virages ou des zones à forte accélération.

Les zones de conduite pertinentes sont par exemple déterminées grâce à une cartographie de la zone de conduite, ou grâce à un comportement véhicule lors d'un passage sur ces zones, le comportement étant par exemple analysé au vu d'une vitesse et/ou d'une accélération véhicule sur ces zones. Il est ensuite possible de stocker dans le véhicule les différentes catégories de conducteur et leurs profils de vitesse associés.

### III-2 - Classes sécuritaires

Connaissant le potentiel d'adhérence disponible sur le trajet à venir, il est possible de déterminer, parmi l'ensemble des classes de conduite, lesquelles sont « sécuritaires », à savoir lesquelles proposent un profil de vitesse qui permette de ne pas dépasser le potentiel d'adhérence disponible. A cet effet, dans un mode de réalisation, on calcule l'accélération qui serait subie par le véhicule pour chacune des classes de conduite en fonction des tables de profils de vitesse sur le trajet prédéterminé, et le besoin d'adhérence qui en découlerait.

Le trajet correspond à la géométrie de la route sur laquelle le véhicule circule, il est décrit par un ensemble de points dont on connait à priori les coordonnées pour un trajet prédéterminé. Dans une démarche de simplification, on peut assimiler la trajectoire prise par le conducteur sur la route, par nature unique pour chacun des conducteurs, au trajet décrivant la route et commun à tous les conducteurs. On dispose alors d'une table de points décrivant une trajectoire approximative qui sera prise par le conducteur, et permettant de calculer en chaque point la courbure instantanée p = 1/ R du trajet (où R est le rayon de courbure). La courbure étant connue, les vitesses des classes de conduite permettent de calculer en chaque point l'accélération transversale instantanée subie par le véhicule par la relation γ_{y} = V².ρ = V²/R.

Les vitesses des classes de conduite permettent par ailleurs de calculer en tout point l'accélération longitudinale, γₓ = dV/dt. En considérant dans un premier temps un véhicule modélisé par un point matériel, ces accélérations, exprimées en G, sont l'image de d'adhérence consommée, ceci pour chaque classe. Il est alors possible de déterminer, parmi l'ensemble des classes de conduite, celles pour lesquelles l'adhérence consommée sur un trajet à venir est inférieure au potentiel d'adhérence disponible, et garantit donc une conduite sécuritaire.

Dans un mode de réalisation préférentielle, le trajet à venir est découpé en un ensemble de segments, et le calcul est effectué sur chacun de ces segments. Le segment le plus pénalisant est alors utilisé pour déterminer si chacune des classes permet, ou non, de respecter la limite fixée par le potentiel d'adhérence disponible.

### III-3 - Choix d'une classe

La classe de conduite mise en œuvre dans le véhicule sera choisie parmi les classes identifiées comme sécuritaires au vu du potentiel d'adhérence du trajet à venir. Pour effectuer le choix parmi ces classes sécuritaires, il est avantageux de choisir celle qui sera le plus confortable pour un conducteur, à savoir celle qui est la plus proche de son profil, que nous appellerons « classe préférée » dans la suite de la demande.

La classe préférée peut être choisie explicitement par le conducteur lui-même, par exemple via une interface graphique présente dans le véhicule. On précise ici que dans un mode de réalisation avantageux, le conducteur peut choisir de changer de classe préférée en cours de roulage.

Dans un autre mode de réalisation, la classe préférée est identifiée dans le véhicule via un processus d'identification embarqué dans un calculateur du véhicule. Dans ce cas, avantageusement, la classe identifiée est proposée au conducteur qui a la possibilité, via une interface graphique, de valider cette classe identifiée. La classe identifiée peut également être automatiquement validée comme classe préférée, sans intervention du conducteur, sur des critères de durée ou de distance parcourue avec un processus d'identification activé.

Ainsi, connaissant l'ensemble des classes sécuritaires, et la classe préférée, il est possible de déterminer une classe de confort sécuritaire. Dans le cas où la classe préférée est une classe sécuritaire, elle est choisie comme classe de confort sécuritaire. Dans le cas où la classe préférée n'est pas sécuritaire, on choisira, parmi l'ensemble des classes sécuritaires, celle qui se rapproche le plus de la classe préférée.

La classe de conduite ayant été sélectionnée, on connaît alors le profil de vitesse correspondant sur un trajet donné. Partant de ces éléments, il sera alors possible, sous certaines conditions définies ci-après, de proposer une vitesse de confort sécuritaire au véhicule et/ou à son conducteur.

### IV - Détermination d'une vitesse proposée

### IV-1 - Localisation du véhicule

A cet effet, il est utile, dans un mode de réalisation, de connaître la géolocalisation du véhicule, à savoir ses coordonnées GPS. On considérera alors que le véhicule est dit « localisé ». Il est alors possible d'associer la localisation du véhicule à une position dans la table des profils de vitesse du trajet considéré pour la classe de conduite sélectionnée. Cette table associe en effet une vitesse à chaque coordonnée du trajet, et ceci pour chaque classe de conduite identifiée.

Lorsque le véhicule a été localisé une première fois, des contrôles réguliers sont effectués pour vérifier qu'il reste bien sur le trajet considéré. Ces contrôles correspondent, par exemple, à un contrôle de distance au trajet, ou à un contrôle de cap entre le véhicule et le trajet considéré.

Lorsque le véhicule est dans un état « non localisé », on cherche à le localiser, c'est-à-dire à le rapprocher d'un trajet connu et identifié dans les profils des classes du conduite. Pour ce faire, on cherche sur l'ensemble du trajet considéré le point le plus proche de la position actuelle du véhicule. Dans un mode de réalisation, on détermine ensuite le segment le plus proche, formé du point le plus proche et du second point le plus proche. On calcule ensuite la distance orthogonale entre le véhicule et le segment. Tant que cette distance est supérieure à un seuil prédéterminé, on considère que le véhicule est toujours non localisé. Dans un mode de réalisation préférentiel, ce seuil est fixé entre cinq et quinze mètres, et plus préférentiellement à dix mètres.

Si la distance orthogonale entre le véhicule et le segment, devient inférieure au seuil prédéterminé, on détermine alors un écart entre le cap du véhicule et le cap du segment. Si cet écart est inférieur à un seuil prédéterminé, par exemple 90°, on considère alors que le véhicule est localisé. Dans le cas contraire, le véhicule reste dans un état non localisé.

Dans cet état non localisé, il apparaît difficile de proposer une vitesse pertinente. Par conséquent, de manière préférentielle, on relancera le processus de localisation tant que le véhicule sera dans un état non localisé.

### IV-2 - Proposition de base de vitesse

Le véhicule étant localisé sur un segment connu, et une classe de conduite ayant été sélectionnée, il est possible de déterminer la vitesse du profil aux deux extrémités du segment, qui correspondent à deux points de la table des profils associée à la classe de conduite. A cet effet, dans un mode de réalisation, on réalise une interpolation entre les vitesses des deux points pour déterminer une vitesse à la position du véhicule. Cette interpolation est réalisée, par exemple, en résolvant une équation de mouvement uniformément accéléré.

La détermination de cette proposition de base de vitesse sera ultérieurement détaillée à l'aide de figures. Dans un mode de réalisation de l'invention, cette proposition de base sera la vitesse proposée au véhicule et/ou au conducteur.

### IV-3 - Limitation de vitesse

Toutefois, on constate que cette vitesse de base doit parfois être limitée par d'autres éléments de l'environnement. Ces éléments sont, par exemple, compris dans le groupe comprenant : une limitation de vitesse légale, des conditions d'adhérence et/ou météorologique. Ces éléments peuvent être détectés par exemple via la lecture d'informations sur le bus CAN du véhicule. En effet, si le conducteur détecte une dégradation des conditions de roulage, il aura une action telle que l'allumage des feux de détresse, des feux antibrouillard, qui sera visible sur les données circulant sur le bus CAN du véhicule.

Ainsi, dans un autre mode de réalisation, la vitesse proposée au véhicule correspond à la proposition de base limitée par un facteur dépendant des événements précédemment mentionnés.

Dans un exemple, cette limitation de vitesse s'effectue sous la forme d'un écrêtage de la vitesse de base proposée, et ce afin de rester dans des conditions sécuritaires.

Toutefois, on a constaté qu'un simple écrêtage pouvait introduire une discontinuité dans le roulage, et être ressenti, dans le véhicule, comme un manque d'homogénéité de comportement sur le trajet. Par conséquent, dans un mode de réalisation perfectionné de l'invention, la limitation de vitesse sera effectuée via un changement de classe de conduite du conducteur. En effet, en passant sur une classe de conduite avec une dynamique inférieure, il sera possible de rester dans les limites de vitesse nécessaires au vu des événements extérieurs, tout en conservant un comportement homogène sur le trajet.

### IV-3 - Traitement des transitoires

Si un tel saut de classe est effectué, il est utile, dans un mode de réalisation de l'invention, de prévoir un mécanisme permettant de gérer la transition d'une classe à l'autre.

On précise ici que le mécanisme de transition qui va être décrit est applicable quelles que soient les conditions de changement de classe, i.e. que ce soit un changement de classe imposé par le véhicule et/ou choisi par le conducteur.

Le changement de classe implique de passer de la vitesse d'une classe actuellement sélectionnée dans le véhicule à une nouvelle classe, alors même que les vitesses de profil des deux classes n'évoluent pas nécessairement de la même façon. Ainsi, afin de garantir une continuité, on effectue une moyenne pondérée entre les vitesses des deux classes sur un segment de trajet considéré, et on propose cette vitesse au véhicule.

De manière avantageuse, cette moyenne est calculée sous la forme :
*Vᵢ* = *kᵢ.V_{ClasseDébut i}* + (1 - *kᵢ*).*V_{ClasseFin i}* k étant la pondération, permettant de faire passer progressivement le poids de la classe de départ de 100% à 0%, et complémentairement pour la classe cible.

Ce mécanisme de transition sera ultérieurement détaillé à l'aide de figures.

### IV-4 - Dispositif d'alerte ou d'information du conducteur

Dans un exemple de réalisation, un procédé selon l'invention comprend une étape d'affichage, dans le véhicule, de la vitesse proposée déterminée au préalable, que nous appellerons ici vitesse préconisée.

Cet affichage peut prendre plusieurs formes, par exemple sous forme d'une vitesse préconisée au prochain virage, ou encore d'une vitesse préconisée à un point particulier situé à une certaine distance. En outre, l'affichage peut mettre en œuvre un code couleur permettant d'indiquer que la vitesse préconisée n'est pas une vitesse de confort, mais une vitesse limite due à un potentiel d'adhérence limité.

Par ailleurs, la vitesse préconisée étant déterminée par anticipation il est utile, dans un mode de réalisation de l'invention, de prendre en compte le potentiel d'adhérence disponible en temps réel pour avertir le conducteur sur un risque de non-respect à terme de cette condition. Ainsi, dans certaines situations, il est utile d'indiquer au conducteur du véhicule qu'il est déjà temps de freiner s'il veut pouvoir respecter la vitesse préconisée pour le prochain virage. Cet avertissement peut prendre la forme d'une alerte sonore ou visuelle, par exemple en faisant clignoter l'affichage de vitesse.

### IV-4 - Régulation - Limitation du véhicule

Dans un autre exemple de réalisation, un procédé selon l'invention comprend une étape de transmission de la vitesse préconisée à un système d'aide à la conduite installé dans le véhicule. Ainsi par exemple, si le véhicule dispose d'un système de contrôle longitudinal, il est possible d'asservir la vitesse préconisée.

Dans un autre exemple, la vitesse préconisée peut être utilisée comme vitesse maximale mise en œuvre dans un limiteur de vitesse.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :

- La figure 1 montre un exemple d'abaques utilisables dans un procédé selon l'invention, pour la détermination d'un potentiel d'adhérence,
- la figure 2 sera utilisée pour décrire le mécanisme de détermination de classes sécuritaires,
- Les figures 3a et 3b seront utilisées pour détailler le mécanisme de proposition de vitesse mis en œuvre dans un mode de réalisation de l'invention,
- Les figures 4a et 4b seront utilisées pour détailler le mécanisme de transition mis en œuvre dans un mode de réalisation de l'invention,
- Les figures 5a et 5b montrent des exemples de mise en œuvre d'un procédé selon l'invention dans un véhicule.

### DESCRIPTION DU MEILLEUR MODE DE REALISATION DE L'INVENTION

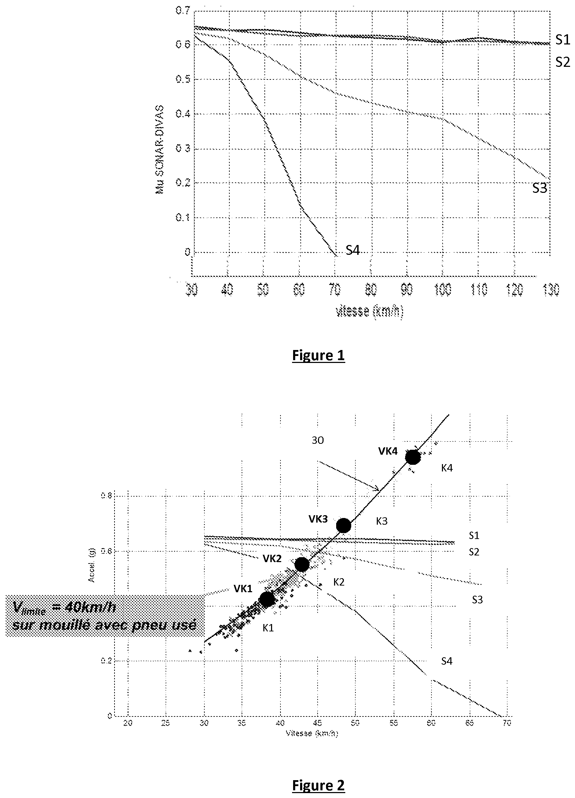

La figure 1 montre un exemple d'abaques utilisables dans un procédé selon l'invention, pour la détermination d'un potentiel d'adhérence.

De manière préférentielle, les abaques sont paramétrés en fonction des paramètres influents qui sont disponibles lors d'une mise en œuvre de l'invention, par exemple la hauteur d'eau et la hauteur sculpture, et sont tracés en fonction de la vitesse de roulage.

Le nombre d'abaques à créer est donc fonction du nombre de valeurs de ces grandeurs que nous allons mesurer. Typiquement si on sait mesurer deux niveaux d'usure (neuf/usé) et deux niveaux d'état d'humidité (sec/mouillé), on créera quatre abaques correspondant aux combinaisons possibles de ces deux états. Si certaines combinaisons conduisent à des résultats d'adhérence très proches, on pourra réduire le nombre d'abaque.

Les abaques sont construits en plusieurs étapes :
- Dans un premier temps, on détermine une distribution statistique de chacune des entrées du modèle. On calcule autant d'abaque qu'il y aura de combinaison de ces paramètres mais chacune est calculée avec un écart type très réduit autour de la valeur du paramètre mesuré. Typiquement, l'identification d'un pneu usé permet de réduire la distribution à 2mm±1.5mm au lieu de 5mm±4mm en l'absence de cette information. La précision de l'estimation d'adhérence s'en trouve largement améliorée.
- On effectue un tirage aléatoire de N combinaisons choisies dans ces distributions des paramètres d'entrées (typiquement N = 1000 ou 10000).
- On calcule N variantes de µ avec ces N combinaisons pour P cas de vitesses (typiquement 11 cas de vitesses variant de 30 à 130 km/h par pas de 10km/h)
- On trace ainsi N courbes µ(V), chacune correspondant à un tirage parmi N combinaisons de paramètres d'entrée.
- On extrait enfin de ce faisceau de courbe le percentile qui nous intéresse en fonction du risque d'estimation visé, par exemple la limite des 10% ou 1% de µ les plus bas.
- En sortie de cette étape, on dispose donc d'une courbe µ(V) pour chacune de combinaison possible des paramètres influents.

Ainsi, la figure 1 montre quatre courbes sur lesquels :
- S1 est l'adhérence disponible pour un pneu neuf, sur une route humide,
- S2 est l'adhérence disponible pour un pneu usé, sur une route humide,
- S3 est l'adhérence disponible pour un pneu neuf sur une route mouillée, et
- S4 est l'adhérence disponible pour un pneu usé, sur une route mouillée.

Il apparaît clairement dans l'exemple ci-dessous que ces informations créent 3 classes de potentiel d'adhérence significativement différentes.

Cette approche permet de réduire le nombre d'information à stocker sans perdre de qualité de prédiction puisque les calculs précis sont réalisés en amont de l'exploitation.

La figure 2 sert à illustrer le mécanisme de détermination de classes sécuritaires en fonction d'un potentiel d'adhérence disponible, elle montre le comportement observé pour les différents conducteurs en un point d'un virage particulier du trajet prédéterminé. Dans ce cas d'utilisation, on suppose que quatre catégories de conducteur ont été déterminées au préalable, la courbe 30 montre quatre groupes de points, appelés K1, K2, K3 et K4, correspondants au besoin d'adhérence appelé par les différents conducteurs dans les différentes catégories de conduite. Les points VK1, VK2, VK3 et VK4 représentent les vitesses obtenues par traitement statistique, stockées dans le véhicule pour cette coordonnée du trajet, et proposées respectivement pour les quatre catégories de conducteur prédéterminées. Sur cette figure, on a également représenté quatre courbes S1, S2, S3 et S4 montrant l'adhérence disponible en fonction de la vitesse pour quatre combinaisons de paramètres influents, sur le même trajet :
- S1 est l'adhérence disponible pour un pneu neuf, sur une route humide,
- S2 est l'adhérence disponible pour un pneu usé, sur une route humide,
- S3 est l'adhérence disponible pour un pneu neuf sur une route mouillée, et
- S4 est l'adhérence disponible pour un pneu usé, sur une route mouillée.

Dans ce mode d'utilisation, connaissant l'état des paramètres influents, un procédé selon l'invention permet de déterminer, parmi les propositions de vitesse VK1 à VK4 celles permettant de ne pas dépasser le potentiel d'adhérence disponible. Par exemple, si le véhicule est équipé de pneumatiques neufs, et que la route est humide, les classes sécuritaires seront les classes correspondant aux vitesses VK1 et VK2. On sélectionnera ensuite, parmi ces deux classes, celle le plus proche d'une classe de confort pour le conducteur.

Dans le cas où la catégorie 2 serait sélectionnée, et où la route deviendrait mouillée, par exemple suite à un changement météorologique, il suffit de basculer de la catégorie 2 à la catégorie 1 pour déterminer une vitesse proposée de roulage. Ce mode d'utilisation est particulièrement avantageux puisqu'il permet de diminuer le nombre de calculs effectués en temps réel dans le véhicule, et donc de diminuer les ressources nécessaires.

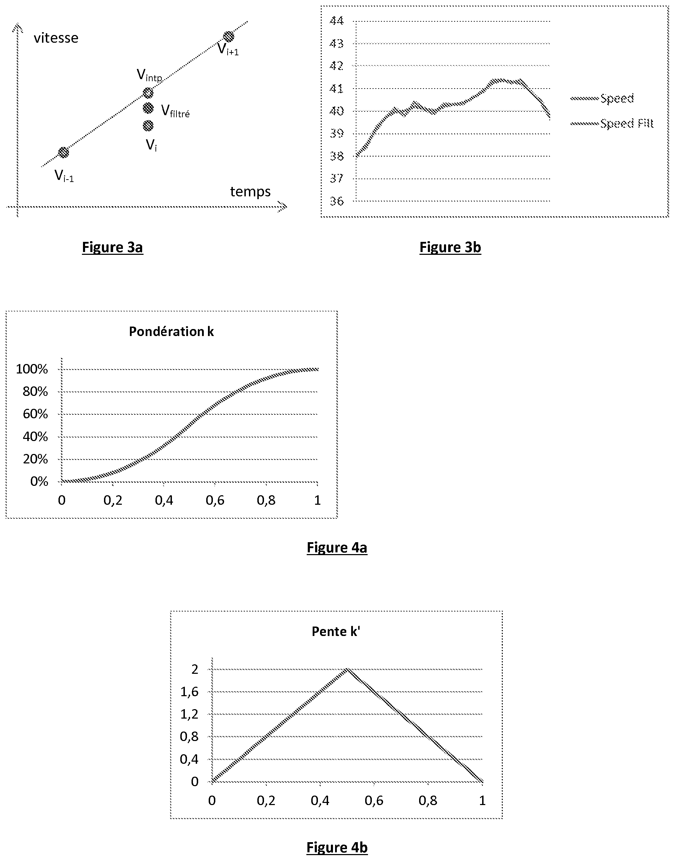

Connaissant alors la classe de conduite sélectionnée, il est possible de déterminer un profil de vitesse préconisé pour le trajet à venir. Si le véhicule est localisé sur un point appartenant à la table des profils de vitesse, la détermination de vitesse est immédiate. En revanche, si le véhicule est localisé entre deux points i-1 et i+1 tels que montrés sur la figure 3a, il est nécessaire d'effectuer une interpolation entre les vitesses Vᵢ₋₁ et Vᵢ₊₁ en résolvant une équation de mouvement uniformément accéléré pour déterminer une vitesse préconisée, représentée Vintp sur la figure 3a.

On précise ici que, dans un mode de réalisation préférentielle, même si le véhicule est localisé sur un point i appartenant à la table des profils d'une classe de conduite, la consigne de vitesse peut être légèrement faussée du fait du bruit de la consigne. Afin d'améliorer la proposition de vitesse, il est possible de filtrer cette consigne en effectuant un moyenne pondérée entre la vitesse Vᵢ au point i et une vitesse interpolée Vᵢₙₜₚ entre les points i-1 et i+1. Le résultat de cette moyenne est une vitesse V_{filtré} telle que montrée sur cette figure 3b.

En outre, ainsi que précédemment mentionné, il est utile dans certains cas d'effectuer un changement de classe de conduite. Toutefois, afin d'assurer une homogénéité du comportement de roulage, il est utile de prévoir un mécanisme de transition lors du passage d'une classe d'origine à une classe cible. Ce mécanisme est illustré sur les figures 4a et 4b.

Ainsi que précédemment indiqué, la continuité est obtenue en effectuant une moyenne pondérée entre la vitesse proposée au vu de la classe d'origine et la vitesse proposée au vu de la classe cible. L'invention met alors en œuvre une étape de calcul en parallèle des vitesses des deux classes, faisant passer progressivement le poids de la classe de départ de 100% à 0% pendant que le poids de la classe cible passe complémentairement de 0% à 100% :
*Vᵢ = kᵢ.V_{ClasseDébut i}* + (1 - *kᵢ*). *V_{ClasseFin i} k étant la pondération, représentée sur la* *figure 4a*

La douceur de la transition est obtenue en étant tangent avec les vitesses des classes au début et à la fin de la manœuvre. Pour cela, la pondération évolue dans le temps selon des fonctions de degré 2 ou supérieur dont la pente est nulle en début et en fin de transition et maximale au milieu. La pondération représente un écart de vitesse à combler, la pente k', montrée en figure 4b, est donc l'image d'une accélération.

Si la transition doit impérativement être effectuée dans un temps donné, notamment au vu d'un risque de conduite, l'accélération de transition est imposée par ce temps. En revanche, si ce temps est ajustable, et en considérant que l'écart de vitesse est stable (les deux vitesses variant sensiblement de la même façon sur un horizon temporel court), on peut déterminer la durée de la transition pour une accélération de transition imposée selon la relation suivante : *tₜᵣₐₙₛ* = *2* ^{∗} *(V_{ClasseCible}* - *V_{ClasseOrigine})* / *aₜᵣₐₙₛ* où tₜᵣₐₙₛ est le temps de transition, et aₜᵣₐₙₛ est l'accélération maximale de transition correspondant à la figure 4b

Dans le cas d'une transition vers une classe inférieure (V_{ClasseCible} < V_{ClasseOrigine}), l'accélération de transition est évidemment négative.

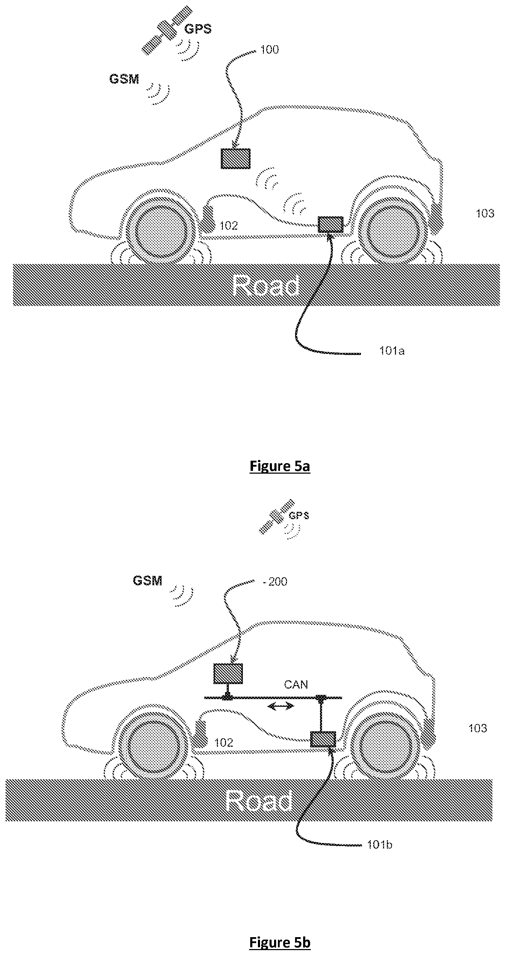

Les figures 5a et 5b montrent des exemples de mise en œuvre d'un procédé selon l'invention dans un véhicule. La figure 5a montre plus particulièrement une mise en œuvre faisant appel à un dispositif connecté non intégré au véhicule, de type Smartphone ou tablette. Ainsi, dans ce mode de réalisation, le dispositif 100 comprend des moyens de communications GSM permettant de recevoir des données externes telles que des cartographies ou des informations concernant le trafic ou autres. En outre le dispositif 100 comprend des moyens pour recevoir des informations permettant la géolocalisation GPS du véhicule ou une détermination de la vitesse du véhicule.

Le véhicule comprend également un calculateur 101a installé dans le véhicule, et relié à différents capteurs tels que des microphones 102 et 103. Ce calculateur 101a comprend des moyens de traitement des signaux issus des capteurs 102 et 103 afin d'obtenir des informations concernant une hauteur d'eau sur la route, une profondeur de texture de la route, un état d'usure ou de pression du pneumatique. Dans un autre mode de réalisation, non représenté sur la figure, le véhicule comprend en outre d'autres capteurs, tels que des capteurs de température, d'usure, de pression ... installés directement sur le véhicule et/ou sur les pneumatiques. Dans ce cas, le calculateur 101a comprend des moyens de traitement des signaux issus de l'ensemble des capteurs. Après traitement, les informations sont envoyées du calculateur 101a vers le dispositif 100, qui met en œuvre un procédé selon l'invention pour déterminer une vitesse préconisée, et l'afficher sur un écran intégré dans le dispositif 100.

Dans l'exemple montré sur la figure 5b, un procédé selon l'invention est mis en œuvre directement dans le calculateur 101b du véhicule. Comme précédemment, ce calculateur est relié à des capteurs 102 et 103 qui ont les mêmes fonctions que dans l'exemple de la figure 5a. En revanche, dans cet exemple, le calculateur 101b est relié au bus CAN du véhicule, afin de lire des informations telles que les vitesses et/ou accélérations du véhicule.

Le module d'affichage et de commande 200 intégré au véhicule comprend des moyens de communications GSM permettant de recevoir des données externes telles que des cartographies ou des informations concernant le trafic ou autres et des moyens pour recevoir des informations permettant la géolocalisation GPS du véhicule. Il peut mettre à disposition ces informations au calculateur 101b sur le bus de communication CAN.

Ce module 200 est également muni de moyens d'affichage permettant d'afficher la vitesse préconisée, afin d'informer le conducteur.
Dans un exemple de réalisation, les caractéristiques du pneumatique sont prises en compte pour la mise en œuvre du procédé. A cet effet, ces caractéristiques sont stockées dans une mémoire du véhicule, et/ou un identifiant du pneumatique est lu par un lecture de type RFID, et associé à des caractéristiques stockées dans une base de données, et/ou le modèle d'adhérence mis en œuvre dans le calculateur 101b ou dans le dispositif 100, est choisi parmi un ensemble de modèles d'adhérence en fonction d'un identifiant du pneumatique.

## Revendications

1. Procédé de proposition d'une vitesse de roulage pour un conducteur au volant d'un véhicule, le procédé comprenant les étapes suivantes au cours desquelles:
- On estime le potentiel d'adhérence disponible à un instant donné entre un pneumatique du véhicule et la chaussée sur un trajet à venir prédéterminé,
- On détermine, parmi un ensemble de classes de conduite prédéterminées, des classes sécuritaires pour lesquels le besoin d'adhérence sur le trajet prédéterminé reste inférieur au potentiel d'adhérence,
- On sélectionne, parmi ces classes sécuritaires, une classe de confort sécuritaire en fonction d'un profil conducteur,
- On détermine, en fonction de cette classe de confort sécuritaire et d'une localisation du véhicule, une vitesse de base proposée de roulage sur une portion de trajet à venir.

2. Procédé selon la revendication 1, dans lequel la détermination d'une vitesse de base proposée comprend une étape d'interpolation entre deux vitesses correspondant à deux points du trajet enregistré dans une table des profils de vitesse de la classe de confort sécuritaire.

3. Procédé selon la revendication 1 ou 2 comprenant une étape initiale de recalage cartographique permettant de connaître le trajet à venir.

4. Procédé selon l'une des revendications précédentes, comprenant une étape de limitation de la vitesse de base proposée, en fonction de paramètres environnants.

5. Procédé selon la revendication 4, dans lequel l'étape de limitation de la vitesse comprend un changement de classe de confort sécuritaire.

6. Procédé selon l'une des revendications précédentes dans lequel l'étape de détermination des classes sécuritaires comprend une étape de détermination, sur le trajet à venir, de l'accélération qui serait subie par le véhicule pour chacune des classes de conduite en fonction des tables de profils de vitesse, et du besoin d'adhérence qui en découlerait.

7. Procédé selon l'une des revendications précédentes dans lequel l'étape de sélection d'une classe de confort sécuritaire consiste à choisir, parmi les classes sécuritaires, la classe la plus proche d'une classe présélectionnée par le conducteur, ou pré-identifiée par le véhicule en fonction du profil conducteur.

8. Procédé selon l'une des revendications précédentes comprenant une étape, avant la détermination d'une vitesse proposée, de vérification de la localisation du véhicule

9. Procédé selon l'une des revendications précédentes, comprenant une étape d'affichage, dans le véhicule, de la vitesse proposée

10. Procédé selon l'une des revendications précédentes, comprenant une étape de transmission de la vitesse préconisée à un système d'aide à la conduite installé dans le véhicule.

## Patentansprüche

1. Verfahren zum Vorschlag einer Fahrgeschwindigkeit für einen Fahrer am Lenkrad eines Fahrzeugs, wobei das Verfahren die folgenden Schritte enthält, während denen:
- das zu einem gegebenen Zeitpunkt verfügbare Haftpotential zwischen einem Luftreifen des Fahrzeugs und der Straße auf einer vorbestimmten kommenden Strecke geschätzt wird,
- unter einer Gruppe von vorbestimmten Fahrklassen Sicherheitsklassen bestimmt werden, bei denen der Haftbedarf auf der vorbestimmten Strecke unter dem Haftpotential bleibt,
- aus diesen Sicherheitsklassen eine Sicherheitskomfortklasse abhängig von einem Fahrerprofil ausgewählt wird,
- abhängig von dieser Sicherheitskomfortklasse und einem Standort des Fahrzeugs eine vorgeschlagene Basisfahrgeschwindigkeit auf einem kommenden Streckenabschnitt bestimmt wird.

2. Verfahren nach Anspruch 1, wobei die Bestimmung einer vorgeschlagenen Basisgeschwindigkeit einen Schritt der Interpolation zwischen zwei Geschwindigkeiten entsprechend zwei Punkten der in einer Tabelle der Geschwindigkeitsprofile der Sicherheitskomfortklasse gespeicherten Strecke enthält.

3. Verfahren nach Anspruch 1 oder 2, die einen Ausgangsschritt der Kennfeldrückstellung enthält, der es ermöglicht, die kommende Strecke zu kennen.

4. Verfahren nach einem der vorhergehenden Ansprüche, das einen Schritt der Begrenzung der vorgeschlagenen Basisgeschwindigkeit abhängig von Umgebungsparametern enthält.

5. Verfahren nach Anspruch 4, wobei der Schritt der Geschwindigkeitsbegrenzung eine Änderung der Sicherheitskomfortklasse enthält.

6. Verfahren nach einem der vorhergehenden Ansprüche, wobei der Schritt der Bestimmung der Sicherheitsklassen einen Schritt der Bestimmung, auf der kommenden Strecke, der Beschleunigung enthält, die das Fahrzeug für jede der Fahrklassen abhängig von den Geschwindigkeitsprofiltabellen und dem sich daraus ergebenden Haftbedarf erfahren würde.

7. Verfahren nach einem der vorhergehenden Ansprüche, wobei der Schritt der Auswahl einer Sicherheitskomfortklasse darin besteht, unter den Sicherheitsklassen die Klasse zu wählen, die einer vorab vom Fahrer ausgesuchten Klasse am nächsten ist oder vom Fahrzeug abhängig vom Fahrerprofil vorab erkannt wird.

8. Verfahren nach einem der vorhergehenden Ansprüche, das vor der Bestimmung einer vorgeschlagenen Geschwindigkeit einen Schritt der Überprüfung des Standorts des Fahrzeugs enthält.

9. Verfahren nach einem der vorhergehenden Ansprüche, das einen Schritt der Anzeige der vorgeschlagenen Geschwindigkeit im Fahrzeug enthält.

10. Verfahren nach einem der vorhergehenden Ansprüche, das einen Schritt der Übertragung der empfohlenen Geschwindigkeit an ein im Fahrzeug eingebautes Fahrassistenzsystem enthält.

## Claims

1. Method for proposing a driving speed for a driver at the steering wheel of a vehicle, the method comprising the following steps of:
- estimating the available grip potential at a given instant between a tyre of the vehicle and the roadway on a predetermined upcoming route;
- determining, among a set of predetermined driving styles, secure styles for which the grip requirement on the predetermined route remains lower than the grip potential;
- selecting, among said secure styles, a secure comfortable style according to a driver profile;
- determining, according to said secure comfortable style and to a location of the vehicle, a basic proposed driving speed on an upcoming section of route.

2. Method according to Claim 1, wherein determining a basic proposed speed comprises a step of interpolating between two speeds corresponding to two points of the route recorded in a table of the speed profiles of the secure comfortable style.

3. Method according to Claim 1 or 2, comprising an initial step of map matching allowing the upcoming route to be known.

4. Method according to one of the preceding claims, comprising a step of limiting the proposed basic speed according to surrounding parameters.

5. Method according to Claim 4, wherein the step of limiting the speed comprises a change of secure comfortable style.

6. Method according to one of the preceding claims, wherein the step of determining secure styles comprises a step of determining, on the upcoming route, the acceleration that will be experienced by the vehicle for each of the driving styles according to tables of speed profiles and to the resulting grip requirement.

7. Method according to one of the preceding claims, wherein the step of selecting a secure comfort style comprises selecting, among the secure styles, the style closest to a style preselected by the driver or pre-identified by the vehicle according to the driver profile.

8. Method according to one of the preceding claims, comprising a step, before determining a proposed speed, of checking the location of the vehicle.

9. Method according to one of the preceding claims, comprising a step of displaying the proposed speed in the vehicle.

10. Method according to one of the preceding claims, comprising a step of transmitting the recommended speed to a driver assistance system installed in the vehicle.
